# EUROPEAN PATENT APPLICATION

(11) **EP 1 646 217 A2**
(43) Date of publication of application: **12.04.2006**
(21) Application number: 05292085.7
(22) Date of filing: 06.10.2005
(51) Int. Cl.: H04M 3/56, H04M 7/00, H04L 12/18

(54) **Method and system for teleconferencing**

(30) Priority: 08.10.2004 US 962234
(71) Applicant: France Télécom, 75015 Paris (FR)
(72) Inventor: Mallya, Satya, South San Francisco, CA 94080 (US); Kalonji, Ndiata, South San Francisco, CA 94080 (US); Zhou, Jenny Fengyuan, South San Francisco, CA 94080 (US)

(57) **Abstract**

An embodiment of a method of group communication employs a first step of receiving registrations and un-registrations from a pool of potential users which registers and un-registers users over time. The method employs a second step of establishing a voice communication path (e.g., a passive path) between each registered user and a server. The method continues with a third step of occasionally notifying each registered user of other registered users that are within a contact list for the registered user. In a fourth step, the method receives the voice communication from a particular user who has selected a group of users to receive the voice communication. In a fifth step, the method forwards the voice communication to registered users of the group. An embodiment of a system for group communication comprises a signaling server and a media server. The registration and media servers are coupled to users by way of a packet switching network. In operation, the signaling server receives registrations and un-registrations from the users and occasionally updates a contact list for each registered user with an indication of registration status of a pre-selected subset of the users. The registration status indicates which of the pre-selected subset of the users are registered. The signaling server directs the media server to establish voice communication paths between the media server and the registered users. The media server receives a voice communication from a particular user and forwards the voice communication to a group of the users who are within the pre-selected subset for the particular user.

## Description

### Field of the Invention

The present invention relates to the field of voice communications. More particularly, the present invention relates to the field of voice communications where users communicate at least in part over a packet switching network.

### Background of the Invention

Recently, VoIP (Voice over Internet Protocol) applications have become popular for voice communication over the Internet. A VoIP application allows a computer user to communicate by voice with another computer user if both have the VoIP application running on their computers and both have a microphone and a speaker.

If a computer user desires to establish voice communication with a group of other computer users, the user may establish a VoIP session with each of the other users and couple them together using the VoIP application running on the user's computer. However, such a technique presents several problems. Establishing a VoIP session with each of a group of users and coupling them together uses a significant amount of time in call setup. Also, the user's network connection becomes a bandwidth bottleneck as all communication coming from other users must travel to the user's computer and then to others in the group session. It would be desirable to have a method of group communication over a packet switching network which has low call setup and teardown time. It would be desirable to have a method of group communication over a packet switching network in which a user's computer does not become a bandwidth bottleneck.

What is needed is a more efficient method of group communication over a packet switching network.

### Summary of the Invention

According to an embodiment, the present invention comprises a method of group communication. An embodiment of the method of group communication employs a first step of receiving registrations and un-registrations from a pool of potential users which registers and un-registers users over time. The method employs a second step of establishing a voice communication path between each registered user and a server as users register over time. The method continues with a third step of occasionally notifying each registered user of other registered users that are within a contact list for the registered user. In a fourth step, the method receives a voice communication from a particular user who has selected a group of users from the contact list to receive the voice communication. In a fifth step, the method forwards the voice communication to registered users of the group.

According to another embodiment, the present invention comprises a system for group communication. An embodiment of the system for group communication comprises a signaling server and a media server. The signaling server and the media server are coupled to users by way of a packet switching network. In operation, the signaling server receives registrations and un-registrations from the users and occasionally updates a contact list for each registered user with an indication of registration status of a pre-selected subset of the users. The registration status indicates which of the pre-selected subset of the users are registered. The signaling server directs the media server to establish voice communication paths between the media server and the registered users. In an embodiment, the voice communication paths are passive (i.e., there is little or no bandwidth consumption) until there is active voice (one or more users talking) in a group communication session. In an embodiment, the system employs active mode RTP (real time protocol). Active mode RTP minimizes traffic bandwidth between the media server and user is used when a voice is to be sent or received by a user. The active mode RTP tags voice communications within a session with a particular group communication identification so the media server can use it to forward it to the users involved in the session. The media server receives a voice communication from a particular user and forwards the voice communication to a group of the users who are within the pre-selected subset for the particular user.

These and other aspects of the present invention are described in more detail herein.

### Brief Description of the Drawings

The present invention is described with respect to particular exemplary embodiments thereof and reference is accordingly made to the drawings in which:
Figure 1 schematically illustrates an embodiment of a system for group communication of the present invention;
Figures 2A, 2B, 2C, and 2D illustrate various aspects of an embodiment of a graphical user interface of the present invention;
Figure 3 illustrates an embodiment of a method of group communication of the present invention as a flow chart;
Figure 4 illustrates an embodiment of a method of group communication of the present invention as a sequence diagram; and
Figure 5 illustrates an embodiment of a system for group communication of the present invention.

### Detailed Description of a Preferred Embodiment

According to an embodiment, the present invention comprises a method of group communication. According to another embodiment, the present invention comprises a system for group communication. The present invention enables a computer user to instantly establish a voice communication session with a group of other users. A user may multicast to a group using uni-directional voice communication. Or, the user may establish a bi-directional voice communication session with the group. Voice communication sessions of the present invention employ a minimal call setup. The user establishes the communication by simply choosing the group of users. Recipients may choose to not respond to a voice communication or to mute the voice communication (i.e., silence the voice communication). Users may participate in multiple group voice communication sessions simultaneously.

According to an embodiment, the present invention employs SIP (Session Initiation Protocol) to establish a voice communication session between the user and a media server. Alternatively, the present invention employs another protocol such as H323 or MGCP. The media server forwards the voice communication to others of the group. The media server also forwards other voice communications from others of the group to the user and the group with the exception of not returning each of the other voice communications to its source. According to an embodiment, the present invention employs SIP to add new participants to a group communication session or to couple multiple concurrent group communication sessions. Within a group communication session, the media server maintains virtual connections to participants.

Because the present invention operates over a packet switching network, it is inherently bandwidth efficient. In other words, when a group communication session is in progress, often one or more forward or return paths to or from the communication server will have little traffic. Bandwidth efficiency may be improved using active mode RTP (Real Time Protocol).

According to an embodiment, the method of group communication of the present invention is separate from a traditional VoIP (Voice-over Internet Protocol) application. With separate VoIP and group communication applications, a user may prioritize among them. According to another embodiment, the traditional VoIP application and the method of group communication of the present invention are combined into a single application.

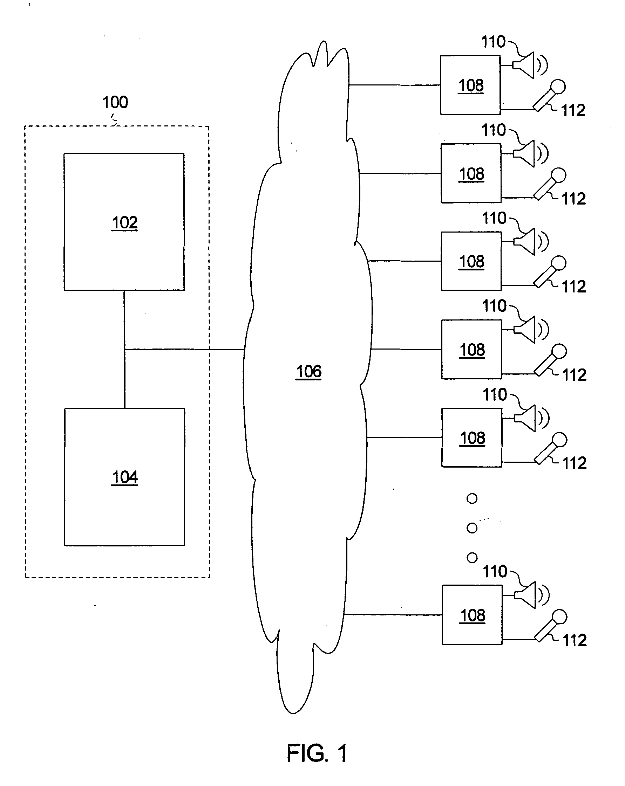

An embodiment of a system for group communication of the present invention is schematically illustrated in figure 1. The system 100 for group communication comprises a signaling server 102 and a media server 104, which are coupled to a packet switching network 106. In an embodiment, the signaling server 102 and the media server 104 comprise nodes of a single computer. In another embodiment, the signaling server 102 and the media server 104 reside on separate computers. The packet switching network 106 may range from a LAN (Local Area Network) to a WAN (Wide Area Network). For example, the LAN may be a workgroup network and the WAN may be the Internet. Users may access the system 100 through computers 108 (i.e., clients), which are coupled to the packet switching network 106. Each of the computers 108 includes a speaker 110 and a microphone 112. Each of the users accesses the system 100 using a client application, which resides on each of the computers 108. Preferably, the client application includes a GUI (Graphical User Interface) which provides easy access and use of the system 100 to users. Alternatively, one or more of the users access the system 100 using another interface such as a command interface or a menu interface.

It will be readily apparent to one skilled in the art that in the context of the present invention a speaker and microphone may form part of a cyber phone, a headset, or some other speaking and listening apparatus.

In operation, the signaling server 102 receives registrations and un-registrations from the users and occasionally updates a contact list for each registered user with an indication of registration status of a pre-selected subset of the users. The registration status indicates which of the pre-selected subset of the users are registered. The signaling server 102 directs the media server 104 to establish voice media paths from the media server to the registered users. In an embodiment, each media path is only active when the registered user is having an active voice session with a group of users. At registration, the voice media path is passive (i.e., not active) and hence no bandwidth is used until a user initiates a voice communication session. In an embodiment, the signaling server 102 receives a request for a voice communication session which includes identifiers for the group of users who the particular user selected for participation in the group communication session. According to this embodiment, the signaling server 102 directs the media server 104 to establish the voice communication session. Upon a particular user establishing a voice communication session, the media server 104 receives a voice communication from the particular user and forwards the voice communication to a group of the users who are within the pre-selected subset of the users. It is only when the media server is communicating voice from other users to a particular user or if a particular user is speaking that the voice media path is active between the particular user and the media server.

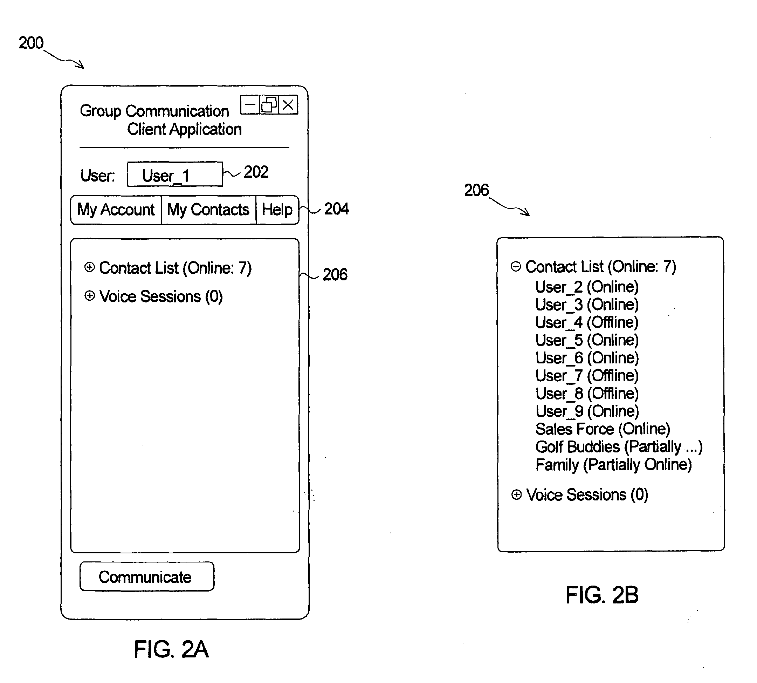

An embodiment of a GUI (Graphical User Interface) of the present invention is illustrated in figures 2A through 2D. Figure 2A illustrates an initial opening view of the GUI 200. The GUI 200 includes a user identification 202, a menu bar 204, and a console window 206. The user identification 202 identifies 'User_1' as the user of this particular client GUI. The console window 206 includes three expandable items, which comprise a contact list 208, a voice session list 210, and a contacts requests list 212.

Figure 2B illustrates the console window 206 with the contact list 208 expanded. The contact list 208 identifies users which User_1 has selected for inclusion in the contact list 208. The contact list may include groups such as a sales force, 'SalesForce' or a group of golf buddies 'GolfBuddies' or family members 'Family.' Each contact listed in the contact list 208 includes an indication of whether the contact is online or offline and in the case of groups whether the group is partially online.

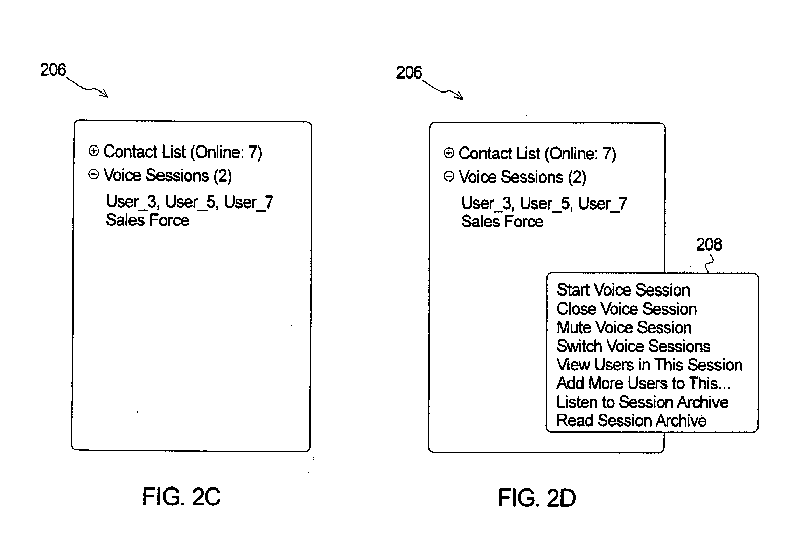

Figure 2C illustrates the console window 206 with the voice session list 210 expanded. The voice session list 210 lists in progress voice sessions for User_1. For example, User_1 may have two voice session in progress in which the first voice session includes three users, 'User_3, User_5, User_7' and the second voice session includes 'Sales Force.'

Figure 2D further illustrates the console window 206 with a menu command window for controlling voice communication sessions. Functions include start voice session, close voice session, mute voice session, switch voice sessions, view users in this voice session, add more users to this voice session, listen to session archive, and read session archive. The menu commands are enabled based upon the state of a voice session. For example, you cannot mute a group when you are not in active voice session.

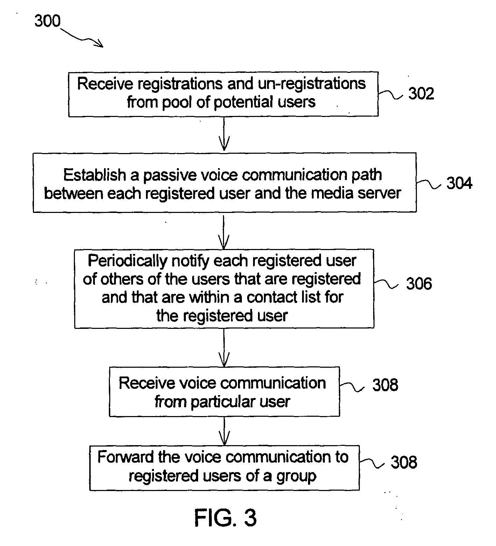

An embodiment of a method of group communication of the present invention is illustrated as a flow chart in figure 3. The method 300 employs a first step 302 of receiving registrations and un-registrations from a pool of potential users, which registers and un-registers the users over time. Users may register upon powering up their computers. Alternatively, users may register upon opening a group communication client application or may register using some other technique such as selecting a registration button within the group communication client application.

For each registered user, the method 300 employs a second step 304 of establishing a passive voice communication path between the registered user and a media server. Note that the voice communication path (i.e., media path) is passive until there is active voice between the user and the media server. The method 300 continues with a third step 306 of occasionally notifying each registered user of others of the users that are registered and that are within a contact list for the registered user.

In fourth and fifth steps, 308 and 310, the method 300 distributes a voice communication from a particular user to a group of users that the particular user has selected. In the fourth step 308, the method 300 receives the voice communication from the particular user. In the fifth step 310, the method 300 forwards the voice communication to registered users of the group. In the fifth step 310, if other members of the group are making simultaneous voice communications to the group and the particular user, the simultaneous voice communications are mixed with the voice communication of the particular user and forwarded to other members of the group as well as forwarding the simultaneous voice communications to the particular user.

An embodiment of the method 300 further comprises a sixth step of notifying each participant of a voice communication session of presence of other participants. Presence may be indicated as registered and listening (i.e., present), as registered but mute (i.e., not present), or as unregistered (i.e., not present).

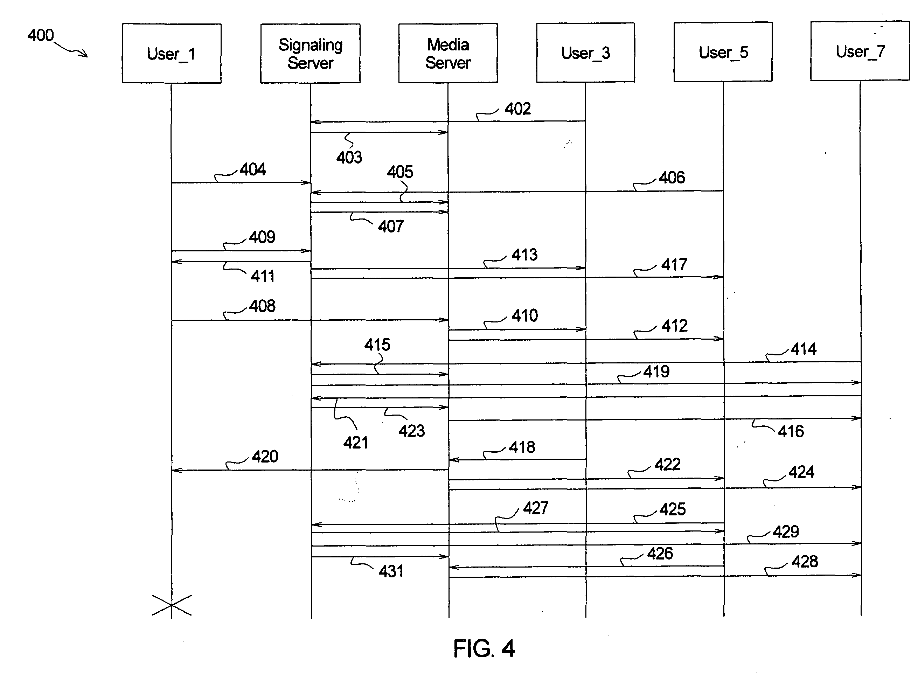

An embodiment of the method of group communication of the present invention is illustrated as a sequence diagram in figure 4. The sequence diagram 400 includes the particular user 'User_1' who initiates a voice communication session and the group of other users, 'User_3, User_5, and User_7,' which the particular user selects for the voice communication session. At some point in time, User_3 registers with the signaling server in a first registration 402. In a first inter-server communication 403, the signaling server directs the media server to form a first voice communication path between the media server and User_3. The first voice communication path is initially set as a passive voice communication path (e.g., using active mode RTP). The first voice communication path comprises a media server port and a port on User_3's computer which are coupled together by a packet switching network. Later, User_1 registers and then User_5 registers in second and third registrations, 404 and 406. In second and third inter-server communications 405 and 407, the signaling server directs the media server to form second and third passive voice communication paths between the media server and User_1 and User_5, respectively..

User_1 begins the voice communication session by selecting the group, User_3, User_5, and User_7, and notifies the signaling server of the group in a session initiation signal 409. In response, the signaling server sends first, second, and third session identification signals, 411, 413, and 417 to User_1, User_3, and User_5, respectively. The first, second, and third session identification signals, 411, 413, and 417 include a unique group voice communication identifier which is used to coordinate communication among User_1, User_3, and User_5. Either concurrently with the session identification signal 409 or after the session identification signal 409, User_1 makes the voice communication to the media server in a first transmission 408. The media server forwards the voice communication to User_3 and User_5 in second and third transmissions, 410 and 412. Since User_7 is not registered at this time, the signaling server does not send a session identification signal to User_7 and the media server does not forward the voice communication to User_7.

In an embodiment, the media server archives the voice communication. In such an embodiment, User_7 may registers in a fourth registration 414 and proceed to access the archives. When User_7 registers in the fourth registration 414, the signaling server, in a fourth inter-server communication 415, directs the media server to establish a fourth voice communication path between the media server and User_7's computer. The signaling server also returns a fourth session identification signal 419 to User_7 which notifies User_7 of the on-going voice communication session taking place among User_1, User_3, and User_5. User_7 may then access the archive by sending an access archive signal 421 to the signaling server which, in a fifth inter-server communication 423, directs the media server to provide the archive of the voice communication in a fourth transmission 416. The archive may provide the voice communication as sound or it may provide the voice communication as text. The latter employs speech recognition to convert the voice communication to text. Now that User_7 is registered, further voice communications in the voice communication session will also be forwarded to User_7. For example, User_3 may choose to respond to the voice communication in a second voice communication which is transmitted to the media server in a fifth transmission 418. The second voice communication is then forwarded by the media server to User_1, User_5, and User_7 in sixth, seventh, and eighth transmission, 420, 422, and 424.

In an embodiment, a subset of the participants of the voice communication session may choose to whisper among themselves. For example, User_5 may choose whisper mode to communicate with User_7. User_5 notifies the signaling server of the requested whisper mode in a whisper mode request 425. In response, the signaling server establishes the whisper mode by sending first and second whisper mode identification signals, 427 and 429, to User_5 and User_7, respectively, and by sending a sixth inter-server communication 431 to the media server. User_5 then makes a third voice communication which is transmitted to the media server in a ninth transmission 426. The media server forwards the third voice communication to User_7 in a tenth transmission 428 but does not forward the third voice communication to others of the participants.

Eventually, the particular user 'User_1' chooses to end the voice communication session. In an embodiment, other participants of the group communication session are given the opportunity to continue the group communication session without the particular user User_1. In such an embodiment, the ability to end the group communication session may be passed to another of the users according to a priority which may be assigned randomly or which may be assigned according to status. For example, in an enterprise environment, the ability to end the group communication session may be passed to the highest level participant (e.g., the manager of a sales force). Alternatively, the voice communication session ends when all participants that were selected by the particular user opt out of the voice communication session.

The present invention may be used in a number of settings. In a call center environment, it may be useful to be able to instantly reach a support staff for help in resolving questions. Customer service representatives for the enterprise may be given access to a number of levels of support staff so that the customer service representative can quickly determine the answer to a question. For example, customer service representatives for a drug company may be given three levels of support staff where each level may be accessed in turn upon determining that the lower level is unable to resolve a question. In an online gaming environment, the present invention may enhance gamers playing experience by allowing them to simultaneously participate in a game and to communicate by voice with others who are participating in the game.

Because the present invention operates over a packet switching network, the present invention is inherently bandwidth efficient. When a group communication session is in progress but only a small number of the participants are speaking, one or more incoming or outgoing paths to or from the media server will have little traffic resulting in low bandwidth usage for those paths. For example, if a particular group communication session has three participants and only one person is speaking one incoming path to the media server and two outgoing paths from the media server will be in use resulting in half the bandwidth usage that would exist if all of the participants were speaking. Bandwidth efficiency may be improved using active mode RTP (Real Time Protocol).

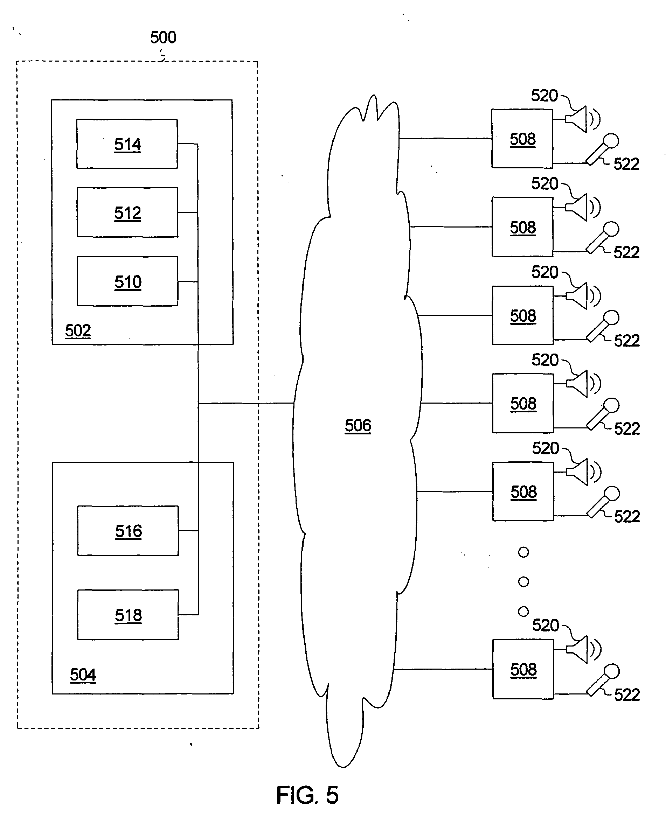

Another embodiment of a group communication system of the present invention is schematically illustrated in figure 5. The group communication system 500 comprises a registration and session server 502 and a media server 504, which are coupled together. A packet switching network 506 couples the group communication 500 to users which include computers 508 (i.e., clients). The registration and session server 502 includes a group voice signaling application 510, a registration application 512, and a user agent server 514. The media server 504 includes a group voice media application 516 and an archive application 518. Each of the computers 508 includes a speaker 520 and a microphone 522.

The group voice signaling application 510 interacts with the registration application 512, the user agent server 514, and the media server 504 to set up a voice communication session when requested by a user and to tear down the voice communication session when it ends. The registration application 512 maintains a list of registered users and occasionally updates users' contact lists to indicate registration status. The user agent server 514 performs signaling functions for users. This includes establishing voice communication paths between users and the media server 504, receiving signaling and user information for initiation of a voice communication session, activating the media server 504 for the voice communication session in coordination with the group voice signaling application 510, and receiving a tear-down request for the voice communication session. The user agent server 514 may be configured to automatically tear-down a voice communication session after a period of inactivity.

The group voice media application 516 mixes voice communications from users who are participating in a voice communication session and multicasts the voice communications to the users while precluding the voice communications from returning to the originators of the voice communications. The archive application 518 stores archives of voice communication sessions. The archives may be sound archives or text archives. The latter employs speech recognition software to convert the voice communications to text. Users who join a voice communication session in progress may find it useful to access an archive of the voice communication session so that they may participate with an understanding of the context of current discussion. Users who opt out of the voice communication session may access the archive to find out what was said while they were away. Users who are participating in the voice communication session may also find the archive useful for refreshing their memory or for determining something that was said while they were distracted.

The foregoing detailed description of the present invention is provided for the purposes of illustration and is not intended to be exhaustive or to limit the invention to the embodiments disclosed. Accordingly, the scope of the present invention is defined by the appended claims.

## Claims

1. A method of group communication comprising the steps of:
receiving registrations and un-registrations from a pool of potential users which registers and un-registers users over time;
for each registered user, establishing a voice communication path between the registered user and a server;
occasionally notifying each registered user of others registered users that are within a contact list for the registered user;
receiving a voice communication from a particular user over the voice communication path between the particular user and the server, the particular user having selected a group of users from the contact list to receive the voice communication; and
forwarding the voice communication to registered users of the group by way of the voice communication paths between the server and the registered users of the group.

2. The method of claim 1 wherein the step of establishing the voice communication path between each registered user and the server establishes a passive voice communication path.

3. The method of claim 1 further comprising the step of utilizing active mode real time protocol to improve bandwidth usage when receiving and forwarding the voice communication and other voice communications.

4. The method of claim 1 wherein the step of receiving the registrations and the un-registrations employs a session initiation protocol.

5. The method of claim 4 wherein the step of notifying the registered user of the other registered users that are within the contact list for the registered user employs the session initiation protocol.

6. The method of claim 1 wherein the voice communication from the particular user to the group of users comprises at least a portion of a voice session.

7. The method of claim 6 wherein a participant of the voice session adds additional users to the voice session.

8. The method of claim 6 wherein a participant of the voice session is also a member of another voice session.

9. The method of claim 8 wherein the participant chooses to switch from participating in the voice session to participating in the other voice session.

10. The method of claim 8 or 9 wherein presence of the participant in the voice session is indicated to the particular user and others of the group of users.

11. The method of claim 8, 9 or 10 wherein the participant merges the voice session and the other voice session together.

12. The method of claim 8, 9, 10 or 11 wherein the participant chooses to not participate in the other voice session, and wherein non-presence of the participant in the other voice session is indicated to other participants of the other voice session.

13. The method of claim 6 wherein at least two participants of the voice session employ a whisper mode.

14. The method of claim 6 wherein a participant of the voice session chooses to mute the voice session.

15. The method of claim 1 further comprising the steps of:
receiving a second voice communication from a participant selected from the group of users; and
forwarding the second voice communication to the particular user and others of the group of users.

16. The method of claim 1 further comprising the step of archiving the voice communication.

17. A system for group communication comprising:
a signaling server coupled to users by way of a packet switching network such that in operation the signaling server receives registrations and un-registrations from the users and occasionally updates a contact list for each registered user with an indication of registration status of a pre-selected subset of the users, the registration status indicating which of the pre-selected subset of the users are registered; and
a media server coupled to the signaling server and coupled to the users by way of the packet switching network such that in operation the signaling server directs the media server to establish voice communication paths from the media server to the registered users and the media server receives a voice communication from a particular user and forwards the voice communication to a group of the users who are within the pre-selected subset for the particular user.

18. The system of claim 17 further comprising a voice signaling application which coordinates the signaling server and the media server to initiate and conclude voice sessions.

19. The system of claim 17 or 18 further comprising a user agent server which coordinates the users and the media server to establish links between the users and the media server.

20. The system of claim 17, 18 or 19 further comprising an archival storage for storing archives of voice sessions or text sessions.
